# EUROPÄISCHE PATENTANMELDUNG

(11) **EP 2 309 137 A1**
(43) Veröffentlichungstag der Anmeldung: **13.04.2011**
(21) Anmeldenummer: 10176359.7
(22) Anmeldetag: 13.09.2010
(51) Int. Cl.: F16B 12/20, F16B 35/04

(54) **Dübelbolzen einer Verbindungsvorrichtung**

(30) Priorität: 19.09.2009 DE 202009012750 U
(71) Anmelder: Hettich-Heinze GmbH & Co. KG, 32139 Spenge (DE)
(72) Erfinder: Lütkenhöner, Marco, 32130, Enger (DE)
(74) Vertreter: Dantz, Jan Henning

(57) **Zusammenfassung**

Dübelbolzen (2) einer Verbindungsvorrichtung (1) zum Verbinden eines ersten Elementes mit einem zweiten Element (4), mit einem Befestigungsteil in Form eines Gewindestiftes (7) zum Festlegen an dem ersten Element und einem damit verbundenen Dübelschaft (6) mit einem Kopfteil (5), welches von einem Spannexzenter eines Spannteiles (3) im zweiten Element (4) hintergriffen werden kann, wobei der Gewindestift (7) und der Dübeischaft (6) als separate Bauteile ausgebildet sind und über eine lotrecht zur Längsachse des Dübelbolzens (2) verlaufende Kulissenführung (8) in Richtung der Längsachse des Dübelbolzens (2) formschlüssig, quer zu dieser Längsachse aber verschiebbar miteinander verbunden sind.

## Beschreibung

Die vorliegende Erfindung betrifft einen Dübelbolzen einer Verbindungsvorrichtung zum Verbinden eines ersten Elementes mit einem zweiten Element, mit einem Befestigungsteil in Form eines Gewindestiftes zum Festlegen an dem ersten Element und einem damit verbundenen Dübelschaft mit einem Kopfteil, welches von einem Spannexzenter eines Spannteiles im zweiten Element hintergriffen werden kann.

Verbindungsvorrichtungen zweier Elemente werden im Möbelbau verwendet, um beispielsweise zwei lotrecht zueinander verlaufende Möbelplatten miteinander zu verbinden, aber auch dazu, Regalbretter unmittelbar an einer Gebäudewand festzulegen.

Da die vorliegende Erfindung lediglich den Dübelbolzen einer entsprechenden Verbindungsvorrichtung betrifft, sei nur erläuternd erwähnt, dass es sich bei dem Spannteil als zweitem Verbindungsteil um ein im zweiten Element festlegbaren Beschlagteil handelt, innerhalb dessen ein mit exzentrischen Spannkurven versehener Spannexzenter angeordnet ist, wobei der Spannexzenter im Verbindungsfalle das Kopfteil hintergreift, so dass durch Drehen des Spannexzenters die beiden miteinander zu verbindenden Elemente fest aneinander angezogen werden.

Entsprechende Verbindungsvorrichtungen werden jeweils paarweise verwendet, einerseits um eine stabile Verbindung sicherzustellen und andererseits, um die

Verdrehsicherheit der Verbindung zu gewährleisten. Zur Übertragung größerer Kräfte können auch mehr als zwei Verbindungsvorrichtungen angeordnet sein.

Da die Abstände zweier Spannteile innerhalb des zweiten Elementes zueinander nicht veränderbar sind, ist es erforderlich, die beiden Dübelbolzen innerhalb des ersten Elementes in exakt dem gleichen Abstand zueinander anzuordnen. Aufgrund unvermeidlicher Toleranzen ist dies nicht immer exakt einzuhalten, so dass es bei der Montage zu Problemen kommen kann.

Der vorliegenden Erfindung liegt die Aufgabe zugrunde, einen Dübelbolzen der gattungsgemäßen Art zu schaffen, der diese Problematik überwindet und es gestattet, den Abstand zweier derartiger Dübelbolzen problemlos auf den vorgegebenen Abstand zweier Spannteile zueinander auszurichten.

Diese Aufgabe wird erfindungsgemäß dadurch gelöst, dass der Gewindestift und der Dübelschaft als separate Bauteile ausgebildet sind und über eine lotrecht zur Längsachse des Dübelbolzens verlaufende Kulissenführung in Richtung der Längsachse des Dübelbolzens formschlüssig, quer zu dieser Längsachse aber verschiebbar miteinander verbunden sind.

Durch diese konstruktiv einfache Maßnahme wird es möglich, einen Dübelschaft eines Dübelbolzens gegenüber dem Gewindestift seitlich zu verschieben, so dass der Achsabstand zweier Dübelschäfte relativ zueinander exakt auf den vorgegebenen Abstand zweier Spannteile angepasst werden kann. Voraussetzung hierfür ist lediglich, dass der Dübelschaft einer ersten Verbindungsvorrichtung in Richtung einer gedachten Verbindungslinie zum Dübelschaft einer zweiten Verbindungsvorrichtung durch entsprechende Ausrichtung der Kulissenführung verschiebbar ist.

Wird die Verschieberichtung des Dübelschaftes der zweiten Verbindungsvorrichtung lotrecht zur Verschieberichtung des Dübelschaftes der ersten Verbindungsvorrichtung ausgerichtet, ist sogar auch eine problemlose horizontale Ausrichtung des ersten Elementes gegenüber dem zweiten Element möglich.

Durch die Gestaltung des Dübelbolzens gemäß vorliegender Erfindung wird also eine erhebliche Montagevereinfachung erzielt durch die Justiermöglichkeiten, die sich aus der Möglichkeit der Verschiebung des Dübelschaftes relativ zum Gewindestift ergeben.

Weitere Merkmale der Erfindung sind Gegenstand von Unteransprüchen.

Ausführungsbeispiele der Erfindung sind in den beigefügten Zeichnungen dargestellt und werden im Folgenden näher beschrieben.

Es zeigen:
- Figur 1: eine perspektivische Explosionsdarstellung einer Verbindungs- vorrichtung mit einem erfindungsgemäßen Dübelbolzen
- Figur 2: eine der Figur 1 entsprechende Perspektivdarstellung mit vor- montiertem Spannteil
- Figur 3: eine Perspektivdarstellung eines erfindungsgemäßen Dübelbolzens
- Figuren 4 und 5: Ansichten des Dübelbolzens gemäß Figur 3 aus zwei um 90° gegeneinander versetzten Blickrichtungen
- Figur 6: eine Perspektivdarstellung des Dübelbolzens gemäß den Figuren 3 - 5, wobei ein Befestigungsteil des Dübelbolzens in Form eines Gewindestiftes von einem Dübelschaft mit einem Kopfteil getrennt ist
- Figur 7: eine Ansicht in Richtung des Pfeiles VII in Figur 6.

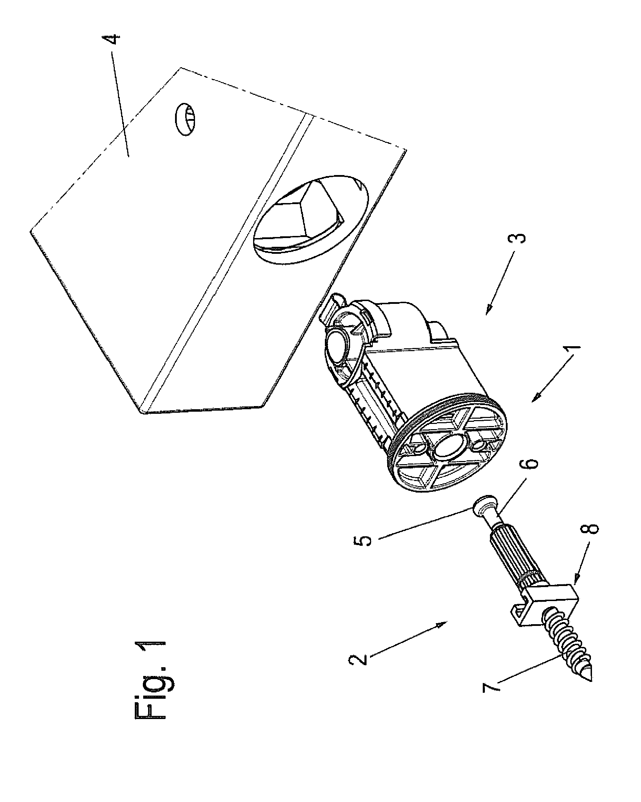

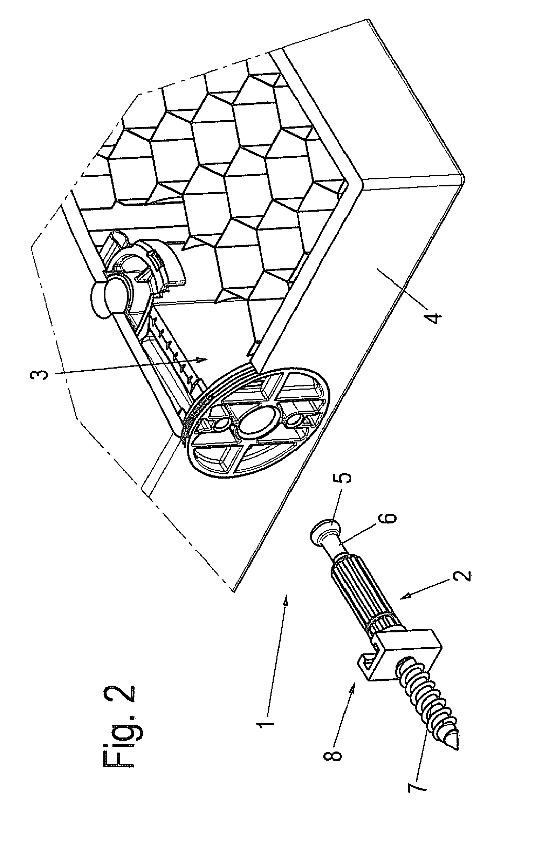

Die Figuren 1 und 2 zeigen, insbesondere zu Orientierungszwecken, eine Verbindungsvorrichtung 1, welche aus einem Dübelbolzen 2 und einem Spannteil 3 besteht und dazu dient, ein erstes (nicht dargestelltes) Element mit einem zweiten Element 4 zu verbinden. Bei dem nicht dargestellten ersten Element, an welchem der Dübelbolzen 2 festlegbar ist, kann es sich um eine Gebäudewandung oder auch um eine Möbelbauplatte handeln, so wie dies beim zweiten Element 4 zur Aufnahme des Spannteiles 3 gezeigt ist.

Das Spannteil 3 wird in an sich bekannter Weise in einer Möbelplatte festgelegt und ist mit einem exzentrische Spannkurven aufweisenden Spannexzenter versehen, der im Verbindungsfall ein Kopfteil 5 eines Dübelschaftes 6 des Dübelbolzens 2 hintergreift. Wie die Figuren 1 und 2 weiterhin zeigen, ist der Dübelbolzen 2 mit einem Befestigungsteil in Form eines Gewindestiftes 7 ausgestattet, der es ermöglicht, den gesamten Dübelbolzen 2 an einem ersten Element festzuschrauben.

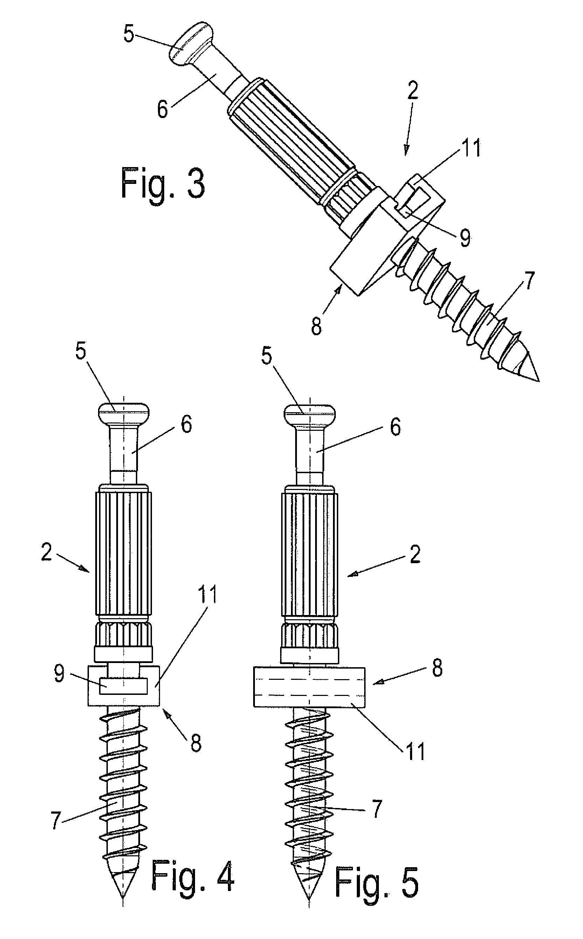

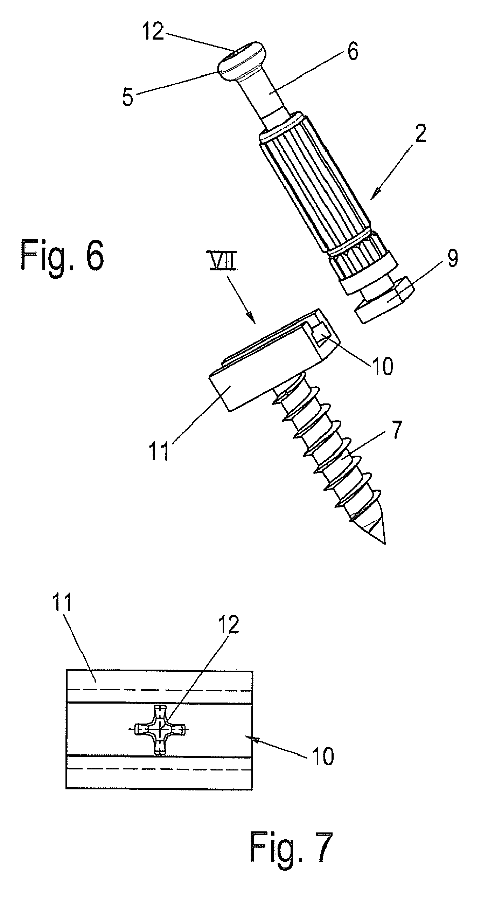

Wie die Figuren 3 - 6 sehr anschaulich zeigen, sind der Gewindestift 7 und der Dübelschaft 6 des Dübelbolzens 2 als separate Bauteile ausgebildet und über eine insgesamt mit dem Bezugszeichen 8 versehene Kulissenführung miteinander verbindbar. Wie besonders die Figuren 3 - 6 zeigen, ist der Dübelschaft 6 an seinem dem Gewindestift 7 zugewandten unteren Ende mit einem einen Kulissenstein 9 bildenden Vierkant ausgestattet, welches in eine entsprechend hinterschnittene, C-förmige Nut 10 eines Führungsteiles 11 einführbar und innerhalb der Nut 10 längs verschiebbar ist. Da sich durch das in die hinterschnittene Nut 10 des Führungsteiles 11 eingreifende Vierkant 9 des Dübelschaftes 6 eine verdrehsichere Verbindung zwischen Dübelschaft 6 und Gewindestift 7 ergibt, kann der Dübelbolzen 2, entsprechende Hemmung gegen Verschiebung und koaxiale Ausrichtung vorausgesetzt, im zusammengesetzten Zustand, so wie er in den Figuren 3 - 5 dargestellt ist, wie ein bekannter, einteiliger Dübelbolzen, in ein erstes Element eingeschraubt werden, wobei Voraussetzung hierfür ist, dass das Kopfteil 5 des Dübelschaftes 6 mit einer Werkzeugaufnahme 12 beispielsweise in Form eines Schlitzes oder eines Kreuzschlitzes, ausgestattet ist.

Denkbar ist aber auch, im Bereich des Nutgrundes der Nut 10 des Führungsteiles 11 eine entsprechende Werkzeugaufnahme 12 vorzusehen, so dass es möglich ist, zunächst den Gewindestift 7 in ein erstes Element einzuschrauben und danach erst den Dübelschaft 6 mit seinem Vierkant 9 in die Nut 10 einzuführen. Der Vorteil dieser Konstruktion liegt darin, dass das Einschrauben des Gewindestiftes 7 in ein erstes Element sicherer wird.

Weiterhin ist es denkbar das auch außen am Körper der Kulissenführung 8 ein Einschraubwerkzeug angreifen kann, beispielsweise ein Maulschlüssel oder es kann der Körper der Kulissenführung 8 die Kontur eines Sechskants erhalten für die Werkzeugaufnahme eines Sechskantsschlüssels. Der generelle Vorteil der zweiteiligen Dübelbolzen-Konstruktion ist darin zu sehen, dass der Dübelschaft 6 quer zur Längsachse des Gewindestiftes 7 verschoben werden kann, wodurch Justierungen ohne weiteres möglich werden.

Grundsätzlich ist anzustreben, dass die Verschiebung des Dübelschaftes 6 quer zur Längsachse des Gewindestiftes 7 zwar verhältnismäßig leichtgängig ist, ohne dass die Gefahr besteht, dass sich der Dübelschaft 6 unbeabsichtigt gegenüber der Längsachse des Gewindestiftes 7 verschieben könnte. Hierbei kann es hilfreich sein, wenn an den im Belastungsfalle aneinander liegenden Kontaktflächen der Kulissenführung 8 eine Feinverzahnung mit geringer Teilung vorgesehen ist. Denkbar ist auch, innerhalb der Kulissenführung 8 eine Feder vorzusehen, welche den Kulissenstein in Form des Vierkantes 9 an die entsprechenden Kontaktflächen des Führungsteiles 11 anpresst.

Statt einer Kulissenführung 8 im gezeigten Sinne, d.h. mit einer C-förmig hinterschnittenen Nut 10 und einem Vierkant 9 als Kulissenstein kann hier selbstverständlich auch die bekannte Form einer Schwalbenschwanzführung gewählt werden.

Bevorzugt ist, dass der Gewindestift 7 prinzipiell als selbstschneidende Schraube ausgebildet und vorteilhafterweise zu einer Spitze ausgeformt ist, so dass der Gewindestift 7 ohne die Notwendigkeit, vorher eine Bohrung in ein erstes Element einzubringen, in dieses erste Element eingeschraubt werden kann, was selbstverständlich bei Möbelbauplatten besonders in Frage kommt.

### Bezugszeichenliste

- 1: Verbindungsvorrichtung
- 2: Dübelbolzen
- 3: Spannteil
- 4: Element
- 5: Kopfteil
- 6: Dübelschaft
- 7: Gewindestift
- 8: Kulissenführung
- 9: Vierkant
- 10: Nut
- 11: Führungsteil
- 12: Werkzeugaufnahme

## Patentansprüche

1. Dübelbolzen (2) einer Verbindungsvorrichtung (1) zum Verbinden eines ersten Elementes mit einem zweiten Element (4), mit einem Befestigungsteil in Form eines Gewindestiftes (7) zum Festlegen an dem ersten Element und einem damit verbundenen Dübelschaft (6) mit einem Kopfteil (5), welches von einem Spannexzenter eines Spannteiles (3) im zweiten Element (4) hintergriffen werden kann, **dadurch gekennzeichnet, dass** der Gewindestift (7) und der Dübelschaft (6) als separate Bauteile ausgebildet sind und über eine lotrecht zur Längsachse des Dübelbolzens (2) verlaufende Kulissenführung (8) in Richtung der Längsachse des Dübelbolzens (2) formschlüssig, quer zu dieser Längsachse aber verschiebbar miteinander verbunden sind.

2. Dübelbolzen nach Anspruch 1, **dadurch gekennzeichnet, dass** die Kulissenführung (8) in Form eines rechteckigen Kulissensteines (9) und eines Führungsteiles (11) mit einer hinterschnittenen, C-förmigen Nut (10) ausgebildet ist.

3. Dübelbolzen nach Anspruch 1, **dadurch gekennzeichnet, dass** die Kulissenführung (8) in Form einer Schwalbenschwanzführung ausgebildet ist.

4. Dübelbolzen nach einem der vorhergehenden Ansprüche, **dadurch gekennzeichnet, dass** an den Kontaktflächen der Kulissenführung (8) eine Feinverzahnung mit geringer Teilung vorgesehen ist.

5. Dübelbolzen nach einem der vorhergehenden Ansprüche, **dadurch gekennzeichnet, dass** der Kulissenstein (9) der Kulissenführung (8) federbelastet an seine Kontaktflächen zur Längsnut (10) angepresst ist.

6. Dübelbolzen nach einem der vorhergehenden Ansprüche, **dadurch gekennzeichnet, dass** der Gewindestift (7) als selbstschneidende Schraube ausgebildet ist.

7. Dübelbolzen nach einem der vorhergehenden Ansprüche, **dadurch gekennzeichnet, dass** der Gewindestift (7) zu seinem freien Ende hin mit einer angeformten Spitze ausgestattet ist.

8. Dübelbolzen nach einem der vorhergehenden Ansprüche, **dadurch gekennzeichnet, dass** im Bereich des Nutgrundes der Nut (10) innerhalb des Führungsteiles (11) eine Werkzeugaufnahme (12) in Form eines Schlitzes oder eines Kreuzschlitzes oder dergleichen vorgesehen ist, wobei diese Werkzeugaufnahme koaxial zur Längsachse des Gewindestiftes (7) liegt.

9. Dübelbolzen nach einem der vorstehenden Ansprüche, **dadurch gekennzeichnet, dass** außen am Körper der Kulissenführung (8) ein Einschraubwerkzeug ansetzbar ist.
